# EUROPEAN PATENT SPECIFICATION

(11) **EP 2 588 814 B1**
(45) Date of publication and mention of the grant of the patent: **31.07.2019**
(21) Application number: 11801253.3
(22) Date of filing: 30.06.2011
(51) Int. Cl.: F24F 13/14, B01D 53/26, F04D 29/66, F24F 13/24, F04D 25/08, F04D 29/58, F24F 13/20, F24F 3/14

(54) **FAN DEVICE**
LÜFTERVORRICHTUNG
DISPOSITIF DE VENTILATEUR

(30) Priority: 30.06.2010 SE 1050719
(43) Date of publication of application: 08.05.2013
(73) Proprietor: Corroventa Avfuktning AB, 56435 Bankeryd (SE)
(72) Inventor: LINDELÖW, Anders, 56532 Mullsjö (SE); CLAESSON, Knut, 56391 Gränna (SE)
(74) Representative: Bergenstråhle Group AB
(86) International application number: PCT/SE2011/050888
(87) International publication number: WO 2012/002900

(56) References cited:
- WO-A1-93/04764
- WO-A1-96/21834
- JP-A- 2005 283 076
- JP-A- 2005 351 205
- JP-A- 2009 250 468
- US-A- 5 737 797
- US-B2- 6 644 913
- US-B2- 6 779 228
- US-B2- 7 406 744

## Description

### Technical field

The present invention concerns an improved fan device which enables simultaneous cooling and sound proofing of a fan in the fan device, at the same time as preventing the reuse of heated cold air for cooling or as process air.

The invention also concerns a method of cooling and soundproofing a fan which is part of a fan device that is separate from, separately connected to, integrated with a dehumidifier unit, or separately utilized, while at the same time preventing the reuse of heated cold air for cooling or as process air.

### Background

SE462583 describes a method and equipment for dehumidifying air where process air is dehumidified by passing through a drying rotor containing moisture-adsorbing agents. A similar equipment is also known from WO96/21834.

It is known how to use low-speed (2800-6000 rpm) side-channel fans along with dehumidifier devices when drying water damage. An example of low-speed fans used for this purpose is Elmo Rietschle 2BH 1400. Such devices are often heavy and take up a lot of space. Since the use of dehumidifier units is customary in residential areas and multifamily houses with several apartments, there is a need to reduce their weight and size for transport and logistical reasons, and also their noise level to lessen the disturbance to the neighbours.

High-speed fans (18000-26000 rpm) are also known. Such fans have a lower weight than low-speed fans and smaller dimensions for a given fan performance. By performance is meant here both air volume flow that can be taken in by the fan per unit of time and pressure delivery. An example of high-speed fans is, e.g., the type Domel 497.3.267. Problems which occur with the use of such fans is a high cooling requirement on account of a large heat output and a high noise volume, which can be a nuisance to persons living or working near where the fan device is in use. These very disadvantages are hard to remedy, since cooling of the system is difficult to combine with its soundproofing. All of this has made these fans inconvenient to use in conjunction with fan devices for use in residential areas.

Prior art documents US 6,779,228 B2 and US 5,737,797 B2 disclose central vacuum units comprising a soundproof volume for acoustic dampening.

### Summary of the invention

One purpose of the present invention is to use the advantages of a high-speed fan in terms of low weight and small dimensions for separate placement of, connection to, or integration with a dehumidifier unit for dehumidification and drying of process air, while at the same time solving the problem of its simultaneous cooling and soundproofing without the heated cold air being reused as either cooling air or process air.

According to the invention, a device for a fan is provided as defined in appended claim 1.

The device achieves soundproofing of the fan, while at the same time the interior of the box is ventilated, which means that the weight can be reduced by around 75% as compared to corresponding performance of heavier low-speed fans with side-channel fan.

In one preferred embodiment, at least some of the first and second surface consists of soundproofing filter. The filter also provides for the need to filter the incoming cold air from dirt and moisture that can damage the fan. The dividing into two or more surfaces of the second volume in combination with a placement of the two cold air ducts and the placement of the cold air inlet and the cold air outlet at a sufficiently large distance furthermore makes sure that heated cold air is not directly reused as cooling air, which increases the cooling effect and reduces the risk of overheating of the fan. The separate placement of the duct for process air and the other duct for cold air on either side of the soundproofing volume has a similar effect.

### Brief description of the drawings

The invention will now be described as an example with reference to the accompanying drawings, where:
Fig. 1 is a perspective view of a first soundproofed volume, containing a fan in a fan device according to the invention.
Fig.2 is a perspective view of a second soundproofed base part in a fan device according to the invention.
Fig. 3 is a section view through a fan device according to the invention, consisting of a soundproofed volume and base part and containing a fan.
Fig. 4 is a section view through an alternative embodiment of a fan device according to the invention.

### Description of embodiments

The following is a detailed description of embodiments.

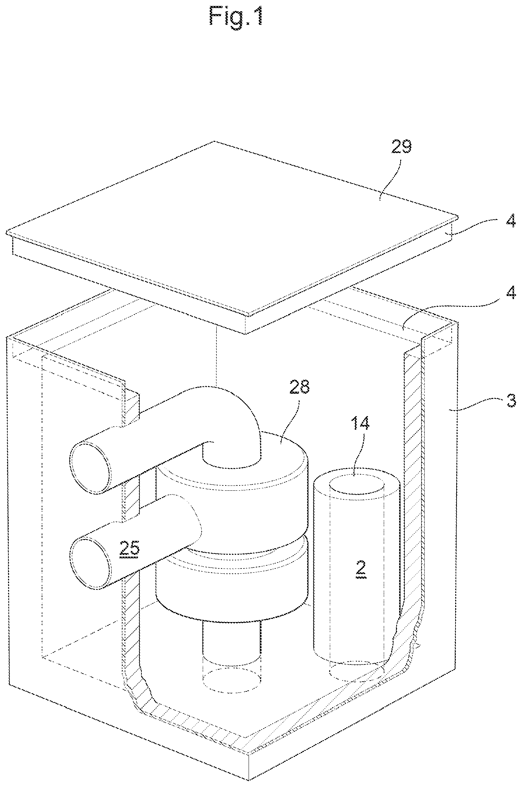

Fig. 1 shows a fan device 2 of a first soundproof volume 3 comprising a fan 28. A separate dehumidifier unit of suitable type, alternatively integrated or connected to the fan device, such as the type presented in SE462583, is not shown in this figure and its component parts and functions will not be further defined in this text. In one embodiment, the volume has external dimensions of 300x300x300 mm, wherein the first soundproof volume's inner space is further limited on account of insulation 4 by between 20-35 mm per side, depending on the insulation. A suitable type of insulation for insulating the interior of the box is 30 mm of pressed mineral wool. Another suitable insulation type for insulating the interior of the box is self-adhesive Antiphon LDA or, say, DA 15S, which is glued firmly with silicone. The first soundproof volume 3 has a separate, soundproofed cover 29.

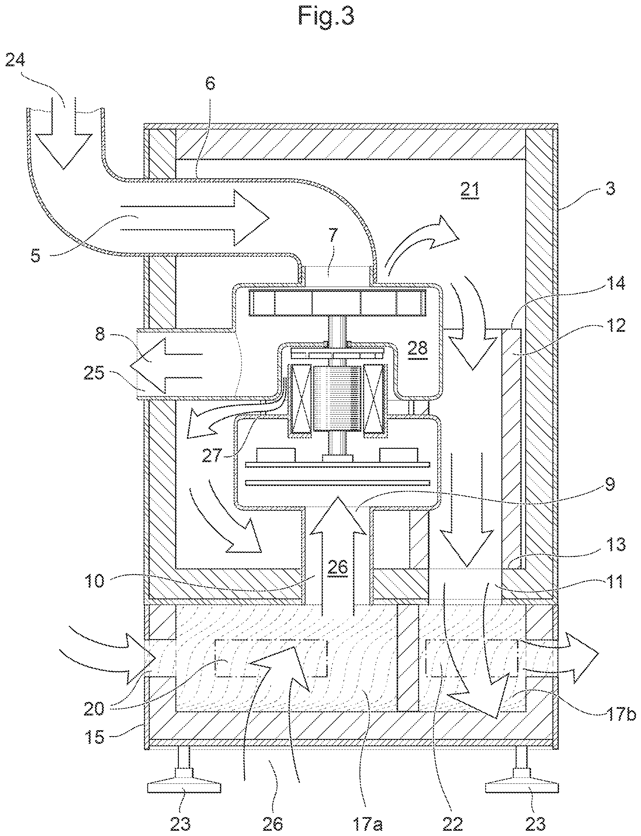

Fig. 3 shows the component parts of the first soundproof volume 3. The fan 28 is placed at the centre of the volume. This can be, for example, of type Domel 497.3.267. At one side of the box is a duct for the process air fan inlet 5, which is connected by a flexible tube or a channel 6 to the fan's process air outlet 7. Both moist process air directly from a humid space being dehumidified, or dehumidified process air in that a dehumidifier unit's outlet from a dehumidifier unit is connected to the fan's process air inlet, can be taken to the fan's process air inlet 7. In the latter case, a so-called pressure drying is provided, where the fan of the dehumidifier unit itself is too weak to convey the dehumidified air to an area that is to be dehumidified. On the same side as the duct for the fan's process air inlet there is another duct for the fan's process air outlet 8. On the opposite side of the fan is the fan's cold air inlet 9. This is connected directly to a first duct for the fan's cold air inlet 10 in the bottom of the soundproof volume. In parallel with the fan is a second duct for cold air 11 in the bottom of the soundproof volume. In the prolongation of this duct there is a soundproof tube or a channel 12 secured at a first end 13. The other end of the tube 14 is open to the interior of the soundproof volume.

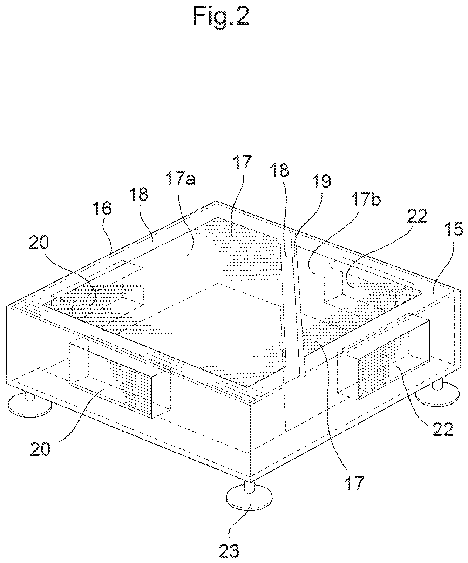

Fig. 2 shows a second soundproof volume 15 in the form of a base part, which is detachably connected to the first soundproof volume 3 when the fan device 2 is in use. For this reason, the second volume 15 has surface dimensions corresponding to the first soundproof volume 3. The second volume, in keeping with Fig. 2, has a body 16 consisting of a thin plate and it comprises a square surface consisting of an air permeable and preferably soundproofing filter 17, for example, of the type BG/290-90. Its outer walls and bottom are comprised with a sound proofing layer 18, preferably consisting of the same material as the first soundproof volume 3, e.g., pressed mineral wool or another suitable air- and possibly solid-soundproofing material. This surface is further divided into two or more surfaces, separated by a diagonal wall 19 of the same material as its body and occupied with a soundproofing layer of the same type as above. When the second soundproof volume 15 is connected to the first soundproof volume 3 in accordance with Fig. 3, the fan's cold air inlet 9 and the first duct for a fan cold air inlet 10 is in communication with the surroundings via two cold air inlets 20 or ducts on the side of the second soundproof volume 15, the soundproofing and air-permeable filter 17a of the one surface; and the interior 21 of the first soundproof volume and the second duct for cold air 11, is in communication with the surroundings via two cold air outlets 22 on the side of the second soundproof volume 15, and the soundproofing and air-permeable filter 17b of the second surface. In one embodiment, the second soundproof volume is connected to the bottom part of the first soundproof volume, i.e., near the footing. To avoid direct contact with the footing, the second soundproof volume can advantageously be outfitted with 4 elevating feet 23. To maximize the distance between the cold air inlet 20 and the cold air outlet 22, these have been placed near the corner on either side of the diagonal wall 19 in an embodiment where the soundproofing volume has a square surface. In the place where the ducts for the cold air inlet 20 and the cold air outlet 22 are situated, the soundproofing layer 18 has been removed so that the air-permeable and preferably soundproofing filter 17 is in direct contact with the surroundings.

What is said above as to the number of surfaces in the second soundproofing volume should be seen as one of many possible embodiments, where it may be necessary to define a larger number of surfaces than two if several fans are used in the same first soundproof volume. The dividing into surfaces, moreover, can be done in ways other than by diagonal walls, such as circular, square, etc.

The fan per Fig. 3 draws in dehumidified or humid process air 24 through the fan's inlet for process air 7 and then through its fan outlet 25. At the same time, the fan draws in cold air 26 from the surroundings through its cold air channel 9, first through the cold air inlet 20 at the second soundproofing volume 15 and through the filter in the first surface 17a of the second soundproof volume and then through its cold air outlet 27 into the interior of the first soundproof volume 21. This air cools the fan and prevents it from becoming overheated during use. The excess pressure in the interior of the first soundproof volume 21 ensures that spent or heated cooling air is forced out through the soundproof tube 12 and a second cold air duct 11, then through the filter at the second surface 17b of the second soundproof volume and the cold air outlet 22 at the second soundproof volume 15 and out to the surroundings.

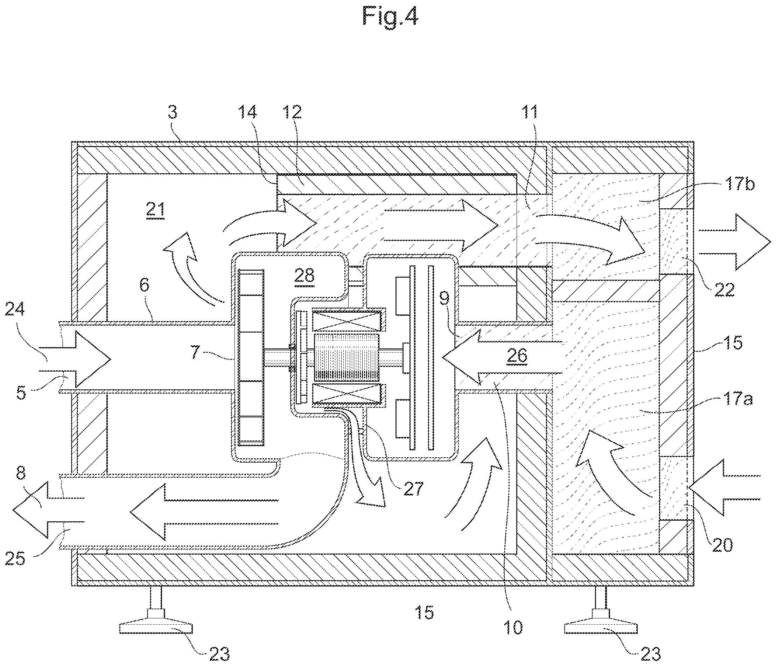

We now refer to Fig. 4, which shows a section through an alternative embodiment of a device according to the invention. This embodiment is similar to the one described above and contains corresponding components and parts, but differs from the latter chiefly in the placement of the cold air inlets and cold air outlets. Thus, the second soundproofing volume is placed at one of the sides of the device in the form of a detachable filter cassette or a cover with filter located behind it. This means that both the cold air inlet or inlets 20 and the cold air outlet or outlets 22 face to the side and this away from the footing on which the device is placed. In this way, one largely avoids drawing in particles, etc., that are located on the footing.

Preferred embodiments of a device according to the invention have been described. It is obvious that these can be varied within the scope of the claims without departing from the notion of the invention. What is defined above regarding the placement of the ducts in the soundproof volume should be considered one of several possible embodiments of the invention. The fan can also be rotated any desired number of degrees, which means that the placement of the ducts in the soundproof volume will be changed accordingly. The duct for the fan's cold air inlet can also be placed at the top of the soundproof volume. It is also possible to conceive of combinations where the soundproof volume contains several fans to provide a boosted performance. These fans can theoretically be rotated by different degrees within the soundproof volume.

In the figures the soundproofing material is shown as a layer of even thickness. It is obvious that this can also vary in thickness and be adapted, for example, to support the fan itself.

Even though this invention is described in connection with dehumidification, it is obvious that the invention can also be used in other application areas, such as radon remediation.

## Claims

1. A device for a fan for integration with or connection to a dehumidifier unit, the device comprising a first soundproof volume (3) comprising a fan (28), with a duct for a fan inlet for process air (5) at one side of the first soundproof volume (3) and connected to a process air inlet (7) of the fan, a duct for a fan outlet for process air (8) at the same side of the first soundproof volume (3), the first soundproof volume (3) further comprising a first duct for cold air (10), and a second duct for cold air (11), wherein the device further comprises a second soundproof volume (15), **characterized in that** the second soundproof volume is divided into two sub-volumes delimited by a first and a second surface (17a, 17b), respectively, separated from each other by a wall (19),
wherein outer walls or bottom of the second soundproof volume have at least one duct for cold air intake (20) on one side of the wall and at least one other duct for cold air outlet (22) on the other side of the wall (19) separating the two sub-volumes,
wherein the first volume is connected to the second volume so that the first duct for cold air is in communication with surroundings via the first surface and the second duct for cold air is in communication with the surroundings via the second surface.

2. The device according to claim 1, wherein at least one of the first and second surface (17a, 17b) consists of a soundproofing filter.

3. The device according to claim 1, wherein the device is adapted to be used during dehumidification.

4. The device according to claim 3, wherein the device is integrated with a dehumidifier unit for dehumidification and drying of process air.

5. The device according to claim 1, wherein the first volume (3) is detachably connected to the second volume (15).

6. The device according to claim 1, where the first soundproof volume is provided with a soundproof tube (12) connected to the second duct for cold air with one end open to the interior of the first soundproof volume.

7. The device according to any one of claims 1-6, wherein the second volume (15) comprises a filter cassette disposed on one side of the device.

## Patentansprüche

1. Vorrichtung für ein Gebläse zur Integration oder zum Verbinden mit einer Entfeuchtungseinheit, wobei die Vorrichtung ein erstes schallgedämmtes Volumen (3) umfasst, das ein Gebläse (28) umfasst, mit einem Rohr für einen Gebläseeinlass für Prozessluft (5) an einer Seite des ersten schallgedämmten Volumens (3) und verbunden mit einem Prozesslufteinlass (7) des Gebläses, ein Rohr für einen Gebläseauslass für Prozessluft (8) an derselben Seite des ersten schallgedämmten Volumens (3), wobei das erste schallgedämmte Volumen (3) weiter ein erstes Rohr für kalte Luft (10) und ein zweites Rohr für kalte Luft (11) umfasst,
wobei die Vorrichtung witer ein zweites schallgedämmtes Volumen (15) umfasst, **dadurch gekennzeichnet, dass** das zweite schallgedämmte Volumen in zwei Subvolumina geteilt ist, die jeweils von einer ersten und einer zweiten Oberfläche (17a, 17b) begrenzt sind, die voneinander durch eine Wand (19) getrennt sind,
wobei Außenwände oder ein Boden des zweiten schallgedämmten Volumens mindestens ein Rohr für Einlass kalter Luft (20) auf einer Seite der Wand und mindestens ein anderes Rohr für Auslass kalter Luft (22) auf der anderen Seite der Wand (19), die die zwei Subvolumina trennt, aufweist,
wobei das erste Volumen mit dem zweiten Volumen derart verbunden ist, dass das erste Rohr für kalte Luft mit Umgebungen über die erste Oberfläche in Verbindung steht, und das zweite Rohr für kalte Luft mit den Umgebungen über die zweite Oberfläche in Kommunikation steht.

2. Vorrichtung nach Anspruch 1, wobei mindestens eine der ersten und zweiten Oberfläche (17a, 17b) aus einem schalldämmenden Filter besteht.

3. Vorrichtung nach Anspruch 1, wobei die Vorrichtung angepasst ist, um während des Entfeuchtens verwendet zu werden.

4. Vorrichtung nach Anspruch 3, wobei die Vorrichtung in einer Entfeuchtungseinheit für das Entfeuchten und Trocknen von Prozessluft integriert ist.

5. Vorrichtung nach Anspruch 1, wobei das erste Volumen (3) abnehmbar mit dem zweiten Volumen (15) verbunden ist.

6. Vorrichtung nach Anspruch 1, wobei das erste schallgedämmte Volumen mit einer Schalldämmungsröhre (12) versehen ist, die mit dem zweiten Rohr für kalte Luft mit einem Ende, das zu dem Inneren des ersten schallgedämmten Volumens offen ist, verbunden ist.

7. Vorrichtung nach einem der Ansprüche 1-6, wobei das zweite Volumen (15) eine Filterkassette umfasst, die auf einer Seite der Vorrichtung angeordnet ist.

## Revendications

1. Dispositif pour un ventilateur destiné à être intégré ou relié à une unité de déshumidification, le dispositif comprenant un premier volume insonorisé (3) comprenant un ventilateur (28), avec une conduite pour une entrée de ventilateur pour de l'air de traitement (5) sur un côté du premier volume insonorisé (3) et reliée à une entrée d'air de traitement (7) du ventilateur, une conduite pour une sortie de ventilateur pour de l'air de traitement (8) sur le même côté du premier volume insonorisé (3), le premier volume insonorisé (3) comprenant en outre une première conduite pour de l'air froid (10), et une seconde conduite pour de l'air froid (11), dans lequel le dispositif comprend en outre un second volume insonorisé (15), **caractérisé en ce que** le second volume insonorisé est divisé en deux sous-volumes délimités par une première et une seconde surface (17a, 17b), respectivement, séparés l'un de l'autre par une paroi (19),
dans lequel les parois externes ou le fond du second volume insonorisé ont au moins une conduite pour l'admission d'air froid (20) sur un côté de la paroi et au moins une autre conduite pour la sortie d'air froid (22) sur l'autre côté de la paroi (19) séparant les deux sous-volumes,
dans lequel le premier volume est relié au second volume de sorte que la première conduite pour l'air froid est en communication avec l'environnement par l'intermédiaire de la première surface et que la seconde conduite pour l'air froid est en communication avec l'environnement par l'intermédiaire de la seconde surface.

2. Dispositif selon la revendication 1, dans lequel au moins une de la première et de la seconde surface (17a, 17b) est constituée d'un filtre d'insonorisation.

3. Dispositif selon la revendication 1, dans lequel le dispositif est adapté pour être utilisé pendant la déshumidification.

4. Dispositif selon la revendication 3, dans lequel le dispositif intègre une unité de déshumidification pour la déshumidification et le séchage de l'air de traitement.

5. Dispositif selon la revendication 1, dans lequel le premier volume (3) est relié de manière détachable au second volume (15).

6. Dispositif selon la revendication 1, où le premier volume insonorisé est pourvu d'un tube insonorisé (12) relié à la seconde conduite pour l'air froid avec une extrémité ouverte vers l'intérieur du premier volume insonorisé.

7. Dispositif selon l'une quelconque des revendications 1 à 6, dans lequel le second volume (15) comprend une cassette de filtre disposée sur un côté du dispositif.
